Europäisches Patentamt

European Patent Office

Office européen des brevets

(11) Veröffentlichungsnummer: **0 213 318**
**B1**

# (12) EUROPÄISCHE PATENTSCHRIFT

(45) Veröffentlichungstag der Patentschrift:
03.01.90

(51) Int. Cl.⁴: **F16H 19/08**

(21) Anmeldenummer: 86108965.4

(22) Anmeldetag: 02.07.86

(54) Antriebsvorrichtung zur Erzeugung von Schwenkbewegungen.

(30) Priorität: 31.08.85 DE 3531244

(43) Veröffentlichungstag der Anmeldung:
11.03.87 Patentblatt 87/11

(45) Bekanntmachung des Hinweises auf die Patenterteilung:
03.01.90 Patentblatt 90/1

(84) Benannte Vertragsstaaten:
AT BE CH FR GB LI

(56) Entgegenhaltungen:
CH-A- 647 306
CH-A- 655 768
DE-B- 1 951 080
DE-C- 687 918
FR-A- 2 539 839
GB-A- 22 822
US-A- 2 445 819

(73) Patentinhaber: Arnold Müller GmbH & Co. KG,
Klosterstrasse 48, D-7312 Kirchheim/Teck(DE)

(72) Erfinder: Wurst, Karl-Heinz, Dipl.-Ing., Nelkenstrasse 1,
D-7015 Korntal-Münchingen(DE)

(74) Vertreter: Kratzsch, Volkhard, Dipl.-Ing.,
Mülbergerstrasse 65, D-7300 Esslingen(DE)

ACTORUM AG

## Beschreibung

Die Erfindung bezieht sich auf eine Antriebsvorrichtung zur Erzeugung von Schwenkbewegungen mit den Merkmalen im Oberbegriff des Anspruchs 1.

Es ist eine Antriebsvorrichtung dieser Art bekannt (DE-A-33 03 555), bei der jedes Getriebe aus einem Planetengetriebe besteht. Ein solches Getriebe benötigt eine Vielzahl von Zahnrädern, die teuer sind, auch bei gedrängter Bauweise des Planetengetriebes einen gewissen Platzbedarf haben und durch die jedes Getriebe schwer wird. Derartige Planetengetriebe sind an sich für einen vollständigen Umlauf geeignet. Es hat sich jedoch gezeigt, daß bei derartigen Antriebsvorrichtungen, die z.B. für Industrieroboter sowie sonstige Handhabungsgeräte verwendet werden, und zwar sowohl als Grundachsen wie auch als Handachsen, in vielen Fällen Schwenkwinkel gefordert werden, die kleiner als 100° sind. In solchen Fällen werden daher die Möglichkeiten eines Planetenradgetriebes nicht voll genutzt.

Der Erfindung liegt die Aufgabe zugrunde, eine Antriebsvorrichtung der im Oberbegriff des Anspruchs 1 genannten Art zu schaffen, bei der das jeweilige Getriebe vereinfacht ist unter Einsparung von Platz, Gewicht und Kosten, wobei zugleich die Voraussetzungen dafür geschaffen sind, mit geringem Aufwand die charakteristischen Eigenschaften des Getriebes, nämlich Antriebsmoment und Schwenkwinkel, den jeweiligen Anforderungen entsprechend anpassen zu können.

Die Aufgabe ist bei einer Antriebsvorrichtung der im Oberbegriff des Anspruchs 1 genannten Art gemäß der Erfindung gelöst durch die Merkmale im Kennzeichnungsteil des Patentanspruchs 1.

Durch ein derartiges Kurvengetriebe mit entlang der Nockenbahn bewegten, ablaufenden Nocken sind Gewicht, Platzbedarf und Kosten für das jeweilige Getriebe reduziert. Die Übertragungscharakteristik dieses Getriebes hängt dabei ab von der Steigung und der Weglänge der jeweiligen Nockenbahn. Wählt man eine kleine Steigung für die Nockenbahn, führt dies zu kleiner Achslänge und damit zu reduzierten, axialen Bauabmessungen. Die jeweilige Nockenbahn läßt sich den jeweiligen Bedürfnissen entsprechend wählen, ohne daß dazu die anderen Elemente der Antriebsvorrichtung geändert werden müßten. Wird z.B. zu Beginn der Schwenkbewegung ein großes Moment und ein kleiner Schwenkwinkel gefordert und dann bei zunehmend größerem Schwenkwinkel ein kleineres Schwenkmoment, das bei bestimmten Anwendungsfällen ja bei größerem Schwenkwinkel nicht mehr so groß sein muß, so läßt sich dies durch entsprechende Gestaltung des Verlaufs der Nockenbahn problemlos verwirklichen. Auch andere Anforderungen können in einfacher Weise durch entsprechende Wahl von Verlauf, Steigung und Weglänge der Nockenbahn berücksichtigt werden.

Weitere vorteilhafte Merkmale enthalten die Ansprüche 2 und 3. Durch Einstückigkeit der einen Gelenkhälfte und des einen Getriebeteiles werden Aufwand, Gewicht, Baugröße und Kosten noch weiter verringert.

Eine weitere vorteilhafte Ausführungsform enthält Anspruch 4. Bei der kinematischen Umkehrung befindet sich die Nockenbahn am anderen, zumindest translatorisch bewegten Getriebeteil, während die Nocken Teil der einen Gelenkhälfte sind.

Weitere vorteilhafte Maßnahmen ergeben sich aus den Ansprüchen 5 und 6.

Statt den Getriebeteil ausschließlich bei der Abstützung translatorisch zu bewegen, können auch die Ausführungsformen gemäß Anspruch 7 und 8 von Vorteil sein. Dadurch ist ein um den zusätzlichen Schwenkwinkel im Bereich der Abstützung vergrößerter Gesamtschwenkwinkel erreichbar, wenn die jeweiligen Kurvenbahnen und in Zuordnung dazu die zugeordneten Nocken so angeordnet werden, daß sich diese Schwenkwinkel auch tatsächlich addieren.

Weitere vorteilhafte Ausführungsformen ergeben sich aus den Ansprüchen 9 -14. In dieser Form sind die Nockenbahnen und auch die zugeordneten Nocken einfach, funktionssicher und billig. Wenn als Nockenbahnen eingetiefte Nuten im einen oder anderen Getriebeteil verwendet werden, können die Rollen jedes Paares jeweils einen Durchmesser aufweisen, der nahezu der Gesamtbreite der Nut entspricht, wobei durch Anlage der Rollen an den einander gegenüberstehenden Nockenbahnflanken Spiel zwischen den Nocken und den Nockenbahnen in beiden Achsrichtungen ausgleichbar ist.

Eine weitere vorteilhafte Gestaltung ergibt sich aus Anspruch 15. Durch einen solchen Verlauf der Nockenbahn kann den verschiedensten Anforderungen des Momentenverlaufs und Schwenkwinkelverlaufs ohne Schwierigkeiten entsprochen werden.

Durch die Merkmale im Anspruch 16 ist erreicht, daß sich auch auf dem zumindest translatorisch bewegten Getriebeteil, insbesondere bei dessen Ausbildung als Glocke, Nockenbahnen anordnen lassen.

Durch die Merkmale in den Ansprüchen 17 - 21 ist eine einfache Umsetzung der rotatorischen Antriebsbewegung des einen Motors in eine translatorische Verschiebebewegung der jeweils in dieser Richtung bewegten Getriebeteile erreicht. Als Gewindespindeln eignen sich insbesondere Kugelumlaufspindeln, die genau und dabei verlustarm sind. Die gegenläufigen Gewindegänge beider Gewindespindeln sind hinsichtlich der Steigung völlig gleich. Die Gegenläufigkeit führt dazu, daß bei Umlauf des Rotors des Motors in einer Drehrichtung die eine Spindelmutter mitsamt Getriebeteil gegensinnig zur anderen bewegt wird, und zwar im exakt gleichen Maße, um die Symmetrie zu sichern.

Weitere vorteilhafte Merkmale ergeben sich aus den Ansprüchen 22 - 29. Bei dieser Antriebsvorrichtung mit zwei eigenständigen, koaxialen Motoren kann die Antriebsvorrichtung nicht nur als Gelenk, sondern zugleich auch entweder allein oder der Gelenkfunktion überlagert als Lineareinheit dienen, was allein von der Ansteuerung der Motoren abhängt. Damit kann die Antriebsvorrichtung die Anforderungen an ein Baukastensystem erfüllen, da in dieser Form ein Grundelement für die verschiedensten Anwendungsfälle vorhanden ist und eingesetzt werden kann. So läßt sich die Antriebsvorrichtung sowohl für Grundachsen als auch für Handhabungsachsen insbesondere bei Industrierobotern einsetzen. Ein Einsatz als Linearachse im Bereich der Grundachsen und/oder der Handachsen für einen solchen Industrieroboter, der nur um lotrechte Achsen schwenkbewegliche Elemente hat, ist ebenso möglich wie ein Einsatz im Bereich von Werkzeugmaschinen, Montagerobotern od. dgl. Dort, wo sonst bei Verwirklichung verschiedenster Antriebsvorrichtungen jeweils spezielle, darauf ausgerichtete Bestandteile eingesetzt werden und bei Umstellungen jeweils neue Geräte angeschafft werden müssen, ist ein baukastenartiges Zusammensetzen mit vorhandenen Elementen möglich, z.B. mit einem Gelenkantrieb, der nur Schwenkbewegungen um die Gelenkachse ermöglicht, und/oder mit einem solchen Gelenkantrieb, der je nach Ansteuerung der beiden eigenständigen Motoren auch einen Linearantrieb bildet. Dies führt zu Kostenersparnissen und eröffnet ein großes Feld von Kombinationsmöglichkeiten, ohne daß man jeweils neue Geräte anschaffen muß. Die zugleich als Linearantrieb verwendbare Antriebsvorrichtung ist klein, kompakt, billig und leicht im Vergleich zu sonstigen Kombinationselementen, die sowohl eine Schwenkbewegung um die Gelenkachse als auch eine Linearbewegung ermöglichen. Dadurch ergeben sich bei den verschiedenen Anwendungs- und Einsatzfällen keine Raum- und Platzprobleme, die sonst evtl. bei Linearantrieben wegen eines dafür erforderlichen Antriebsmotors gegeben sind. Die Antriebsvorrichtung, die einen Linearantrieb mit verwirklicht, läßt sich praktisch beliebig im Raum plazieren und einbauen, ohne daß irgendein zusätzlicher Antriebsmotor im Wege wäre. Dabei versteht es sich, daß diese Antriebsvorrichtung zum Linearantrieb für Werkzeugmaschinen, sonstige Maschinen oder Anlagen oder auch für Handhabungsgeräte, Industrieroboter od. dgl. verwendet werden kann. wobei die Bewegungsebene horizontal, vertikal oder auch schräg im Raum verlaufen kann.

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen, wodurch jedoch alle diese Anspruchsmerkmale als an dieser Stelle ausdrücklich und erfindungswesentlich offenbart zu gelten haben.

Weitere Einzelheiten und Vorteile ergeben sich aus der nachfolgenden Beschreibung.

Die Erfindung ist nachfolgend anhand von in den Zeichnungen gezeigten Ausführungsbeispielen näher erläutert. Es zeigen:

Fig. 1 einen schematischen axialen Längsschnitt mit teilweiser Seitenansicht einer Antriebsvorrichtung entlang der Linie I - I in Fig. 3, gemäß einem ersten Ausführungsbeispiel,

Fig. 2a u. 2b jeweils eine schematische Ansicht in Pfeilrichtung IIa bzw. IIb in Fig. 1 von Einzelheiten des Kurvengetriebes,

Fig. 3 eine zum Teil geschnittene schematische Seitenansicht der Antriebsvorrichtung in Fig. 1,

Fig. 4 eine schematische perspektivische Ansicht von Einzelheiten des Kurvengetriebes in kinematischer Umkehr gemäß einem zweiten Ausführungsbeispiel,

Fig. 5 eine schematische perspektivische Ansicht von Einzelteilen eines Kurvengetriebes gemäß einem dritten Ausführungsbeispiel,

Fig. 6 eine etwa Fig. 3 entsprechende schematische und teilweise geschnittene Ansicht einer Antriebsvorrichtung gemäß einem vierten Ausführungsbeispiel,

Fig. 7 einen schematischen axialen Längsschnitt etwa entsprechend demjenigen in Fig. 1 einer Antriebsvorrichtung gemäß einem fünften Ausführungsbeispiel.

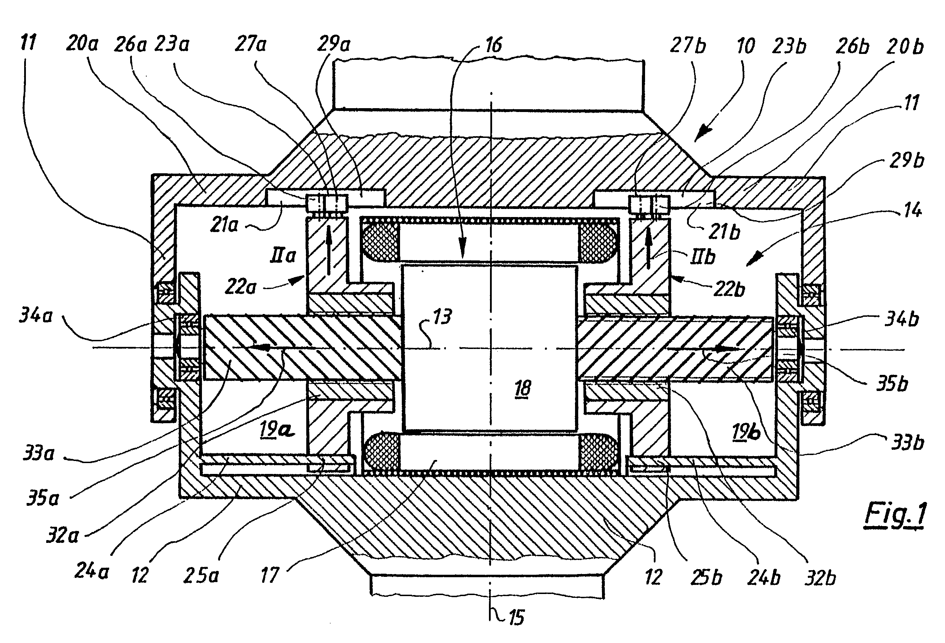

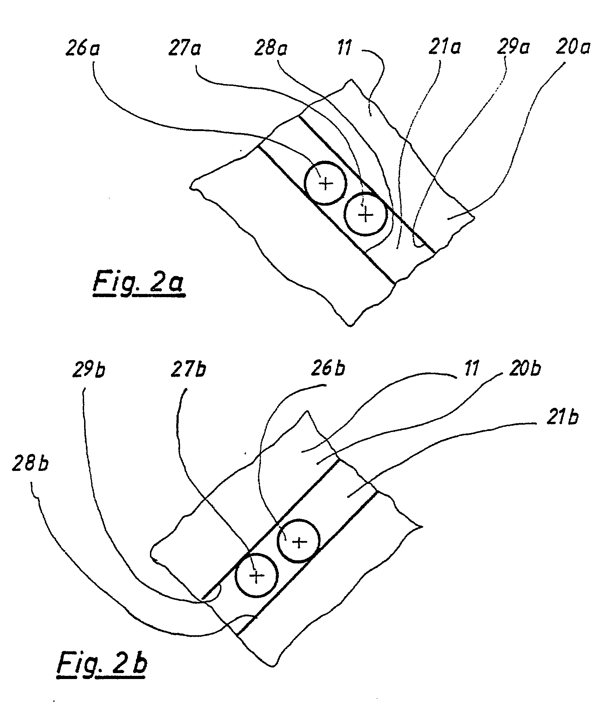

Die Antriebsvorrichtung in Fig. 1 und 2 weist einen Gelenkantrieb 10 mit zwei Gelenkhälften 11 und 12 auf, die um eine Gelenkachse 13 schwenkbeweglich verbunden sind. Der Gelenkantrieb 10 enthält im Gelenk eine Antriebseinheit 14, die beim ersten Ausführungsbeispiel einen symmetrisch zur Symmetrieebene 15 angeordneten Elektromotor 16 mit koaxial zur Gelenkachse 13 angeordnetem Stator 17 und Rotor 18 aufweist. Der Stator 17 ist fest mit der ersten Gelenkhälfte 12 verbunden und somit Teil dieser. Der Rotor 18 dient dem relativen Schwenkantrieb der zweiten Gelenkhälfte 11. Der Antrieb erfolgt beidseitig des Motors 16 über ein dortiges Getriebe 19a bzw. 19b, die gleichartig ausgebildet sind. Nicht weiter gezeigt ist, daß beidseitig oder zumindest auf einer Seite des Motors 16 ein jeweiliges Weg- und Geschwindigkeitsmeßsystem angeordnet ist.

Jedes Getriebe 19a, 19b ist als Kurvengetriebe ausgebildet, das an einem zweiten Getriebeteil 20a bzw. 20b eine Nockenbahn 21a bzw. 21b aufweist, und das am ersten Getriebeteil 22a bzw. 22b entlang der zugeordneten Nockenbahn 21a bzw. 21b bewegte Nocken 23a bzw. 23b aufweist. Dabei wird der erste Getriebeteil 22a, 22b vom Motor 16 zumindest translatorisch, und zwar zumindest im wesentlichen parallel zur Gelenkachse (Schwenkachse) 13, angetrieben. Durch diese Translationsbewegung wird mittels des Kurvengetriebes beidseitig des Motors 16 eine Schwenkbewegung des zweiten Getriebeteiles 20a, 20b erzeugt. Dieser Getriebeteil 20a, 20b, der diese Abtriebsbewegung ausführt, ist fest mit der zweiten Gelenkhälfte 11 verbunden, so daß die Abtriebsbewegung direkt auf die Gelenkhälfte 11 geführt ist. Beim gezeigten Ausführungsbeispiel in Fig. 1 ist dieser die Abtriebsbewegung ausführende zweite Getriebeteil 20a, 20b einstückig mit der zweiten Gelenkhälfte 11. Die Nockenbahn 21a, 21b ist damit direkter Bestandteil dieser zweiten Gelenkhälfte 11, während der erste Getriebeteil 22a, 22b, der die zugeordneten Nocken 23a, 23b trägt und der zumindest translatorisch bewegt ist, an der ersten Gelenkhälfte 12 abgestützt ist.

Bei einem anderen, nicht gezeigten Ausführungsbeispiel sind die Verhältnisse kinematisch umgekehrt, dergestalt, daß die Nockenbahn 21a, 21b Bestandteil des zumindest translatorisch bewegten ersten Getriebeteiles 22a bzw. 22b ist, während die zugeordneten Nocken 23a, 23b am anderen, die Abtriebsbewegung ausführenden, hier mit der zweiten Gelenkhälfte 11 einstückigen zweiten Getriebeteil 20a, 20b sitzen.

Der jeweilige, zumindest translatorisch bewegte Getriebeteil 22a, 22b ist beim ersten Ausführungsbeispiel undrehbar, jedoch zur Schwenkachse 13 zumindest im wesentlichen parallel verschiebbar an der ersten Gelenkhälfte 12 abgestützt. Dies geschieht mittels Längsführungsmitteln an beiden Teilen, die bei der Gelenkhälfte 12 z.B. aus zwei zueinander parallel verlaufenden Stegen 24a, 24b bestehen, denen als zugeordnete Längsführungsmittel am ersten Getriebeteil 22a, 22b eine dortige Längsnut 25a, 25b zugeordnet ist, in die die Stege 24a bzw. 24b mit Formschluß, jedoch relativer Gleitverschieblichkeit, eingreifen. Die ersten Getriebeteile 22a, 22b sind dadurch relativ zur ersten Gelenkhälfte 12 verdrehgesichert.

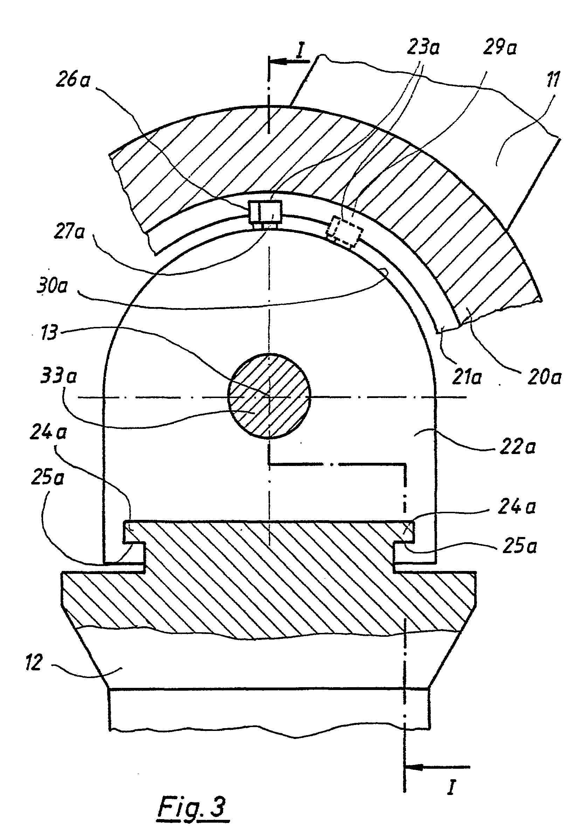

Die jeweilige Nockenbahn 21a, 21b besteht beim ersten Ausführungsbeispiel aus einer eingearbeiteten Nut. Die jeweiligen Nocken 23a, 23b bestehen hier aus Rollen 26a, 27a bzw. 26b, 27b, die jeweils ein Rollenpaar bilden. In Fig. 3 ist nur schematisch angedeutet, daß dem Verlauf der Nockenbahn 21a folgend weitere solcher Rollenpaare vorhanden sein können. Wie insbesondere Fig. 2a und Fig. 2b erkennen lassen, liegt die Rolle 26a bzw. 26b an der einen Nockenbahnflanke 28a bzw. 28b an, während die andere Rolle 27a bzw. 27b an der anderen Nockenbahnflanke 29a bzw. 29b anliegt. Jede Rolle kann nahezu im Durchmesser so breit wie die Nut selbst sein, wobei dann die Rollen 26a, 27a jedes Paares in der Nut praktisch hintereinander plaziert sind. Zumindest eine Rolle jedes Paares 26a, 27a bzw. 26b, 27b ist unter Spielausgleich einstellbar gehalten, was z.B. durch eine nicht weiter gezeigte, an sich bekannte Exzenterlagerung dieser Rolle geschieht. Dadurch läßt sich diese Rolle relativ zur anderen so einstellen, daß zwischen den Rollen einerseits und der jeweiligen Nockenbahn 21a bzw. 21b andererseits kein Spiel vorhanden ist, weder in der einen Drehrichtung noch in der gegenläufigen Drehrichtung.

Die jeweilige Nockenbahn 21a, 21b ist nach Wahl und in Anpassung an die jeweiligen Erfordernisse des Bewegungs- und Momentenverlaufs als Teil einer um die Gelenkachse 13 herum verlaufenden Bogenbahn und/oder Spiralbahn und/oder Ellipsenbahn und/oder Parabelbahn und/oder Hyperbelbahn od. dgl. ausgebildet oder aus Teilen solcher Bahnen zusammengesetzt.

Der erste Getriebeteil 22a, 22b, der zumindest translatorisch bewegt wird, ist beim ersten Ausführungsbeispiel im wesentlichen als Scheibe ausgebildet. Es versteht sich gleichwohl, daß hier auch die Ausbildung in Form einer Glocke oder eines sonstigen, etwa topfartigen Körpers vorteilhaft sein kann. Die Scheibe trägt die Rollenpaare 26a, 27a bzw. 26b, 27b jeweils auf der Außenfläche 30a.

Beim zweiten Ausführungsbeispiel in Fig. 4 sind kinematisch vertauschte Verhältnisse gezeigt. Hier befindet sich die Nockenbahn 21a innerhalb der Außenfläche 30a des ersten zumindest translatorisch bewegten Getriebeteiles 22a, während die beiden Rollen 26a, 27a, die den jeweiligen Nockenbahnflanken 28a bzw. 29a zugeordnet sind und darauf ablaufen, am nicht weiter gezeigten zweiten Getriebeteil gehalten sind, nämlich dem die Abtriebsbewegung vollführenden zweiten Getriebeteil 20a, der mit der zweiten Gelenkhälfte 11 verbunden ist.

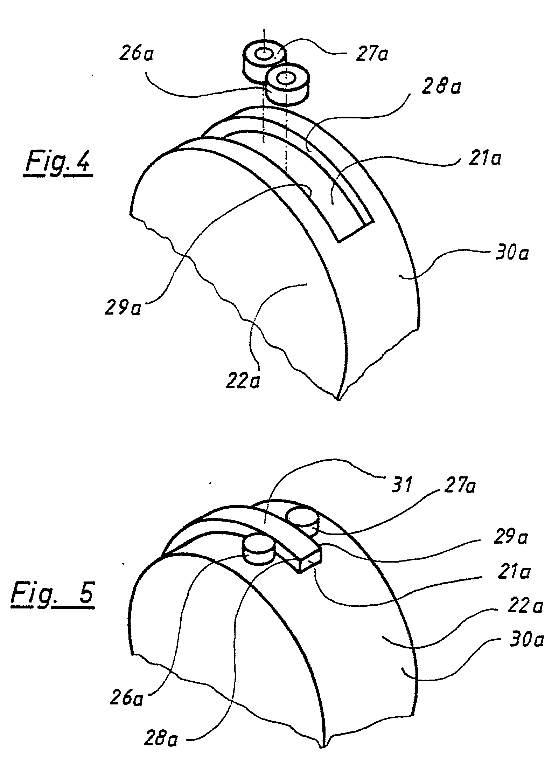

Beim in Fig. 5 gezeigten dritten Ausführungsbeispiel besteht die Nockenbahn 21a aus einem überstehenden Steg 31, der beidseitige Nockenbahnflanken 28a, 29a aufweist, an denen die Rollen 26a bzw. 27a anliegen und abrollen. Diese beiden Ausführungsbeispiele in Fig. 4 und 5 zeigen kinematische Umkehrungen zum ersten Ausführungsbeispiel in Fig. 1 - 3.

Der jeweilige, zumindest translatorisch bewegte erste Getriebeteil 22a bzw. 22b enthält eine Spindelmutter 32a bzw. 32b, die damit drehfest verbunden ist, z.B. einstückiger Bestandteil dieses ersten Getriebeteiles ist. Mit der Spindelmutter 32a bzw. 32b sitzt dieser erste Getriebeteil 22a bzw. 22b auf einer zur Gelenkachse 13 koaxialen Gewindespindel 33a bzw. 33b, die jeweils drehfest mit dem Rotor 18 verbunden ist, wobei die Gewindespindeln 33a, 33b gegenläufige Gewinde aufweisen. Die Gewindespindeln 33a, 33b sind an ihrem Ende mittels Lagern 34a, 34b drehbar in der ersten Gelenkhälfte 12 gelagert, mit der der Stator 17 fest verbunden ist und an der der erste Getriebeteil 22a bzw. 22b gegen Drehung unter Zulassung einer Translationsbewegung abgestützt ist.

Wird der Motor 16 eingeschaltet und läuft dabei der Rotor 18 um, so laufen dabei auch die beiden Gewindespindeln 33a, 33b mit gegenläufigem Gewinde um. Sie bestehen z.B. aus Kugelumlaufspindeln. Dadurch bedingt werden die jeweils mit Spindelmutter 32a bzw. 32b versehenen ersten Getriebeteile 22a bzw. 22b in Pfeilrichtung 35a bzw. 35b koaxial zur Gelenkachse 13 bei der einen Umlaufrichtung des Rotors 18 nach außen bewegt. Dabei laufen die Rollen 26a, 27a an den jeweiligen Nockenbahnflanken 28a bzw. 29a ab. In gleicher Weise laufen auf der anderen Seite symmetrisch dazu die Rollen 26b, 27b an der dazu gegenläufigen Nockenbahn 21b, und zwar deren Nockenbahnflanken 28b, 29b,ab. Auf diese Weise wird die Linearbewegung in Pfeilrichtung 35a bzw. 35b über das Kurvengetriebe umgesetzt in eine Schwenkbewegung, die die zweite Gelenkhälfte 11 relativ zur ersten Gelenkhälfte 12 ausführt.

Wird der Motor 16 umgesteuert, so daß der Rotor 18 gegensinnig läuft, so erfolgt eine zu den Pfeilen 35a, 35b gegensinnige axiale Antriebsbewegung der ersten Getriebeteile 22a bzw. 22b, die über das Kurvengetriebe umgesetzt wird in eine relative Schwenkbewegung der zweiten Gelenkhälfte 11 relativ zur ersten Gelenkhälfte 12 mit entsprechendem Schwenkwinkel.

Die Anordnung der Nocken 23a, 23b einerseits und der zugeordneten Nockenbahn 21a, 21b andererseits einschließlich der Bahnfigur kann vielfältig und variabel gewählt werden. In aller Regel werden diese Getriebeelemente so bestimmt, daß die beiden Gelenkhälften 11, 12 eine relative Schwenkbewegung ausführen, die etwa in der Größenordnung von 90° oder etwas größer ist, da selten größere Schwenkwinkel als 90° gefordert werden. Wird für eine Antriebsvorrichtung eine Charakteristik gewählt, bei der zunächst ein großes Schwenkmoment mit kleinem Schwenkwinkel und hiernach ein zunehmend größerer Schwenkwinkel mit kleinerem Schwenkmoment benötigt werden, so kann man dem durch entsprechende Gestaltung der Nockenbahn 21a, 21b einerseits mit Nocken 23a bzw. 23b andererseits entsprechen. Man gestaltet die Nockenbahn 21a bzw. 21b z.B. entsprechend steil oder weniger steil. Wird umgekehrt an die Antriebsvorrichtung die Anforderung gestellt, zunächst ein kleines Schwenkmoment und einen großen Schwenkwinkel und hiernach ein großes Schwenkmoment und einen kleineren Schwenkwinkel zu ermöglichen, so kann auch dies durch entsprechende Wahl des Verlaufs der Nockenbahn 21a, 21b verwirklicht werden. Damit ist aufgezeigt, daß sich durch das Kurvengetriebe in einfacher Weise Anpassungen an die verschiedensten Anforderungen vornehmen lassen, die an die jeweilige Antriebsvorrichtung gestellt werden, ohne daß man dabei die anderen Elemente ändern müßte. Im einfachsten Fall, z.B. ausgehend vom Ausführungsbeispiel gemäß Fig. 5, braucht lediglich ein anderer Steg 31 mit anderem Verlauf seiner Nockenbahn 21a eingesetzt zu werden, unter Beibehaltung aller übriger Elemente dieser Antriebsvorrichtung. Im übrigen benötigt dieses beschriebene Kurvengetriebe wenig Einzelteile und ist daher leicht, platzsparend und billig.

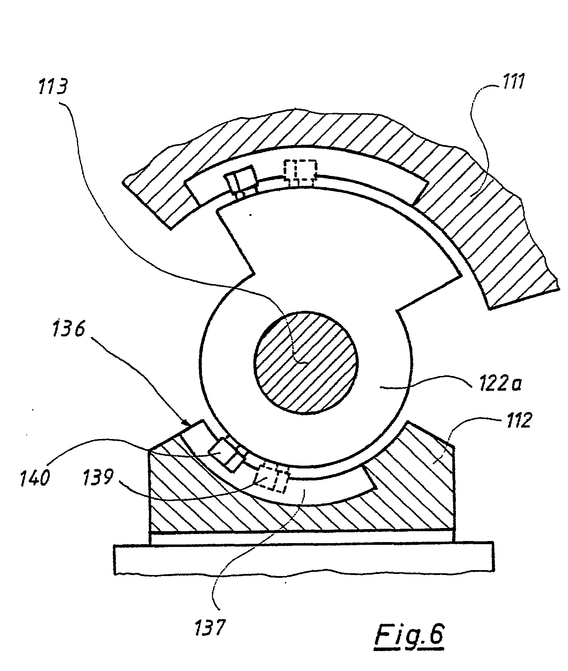

Bei dem in Fig. 6 gezeigten vierten Ausführungsbeispiel sind für die Teile, die dem ersten Ausführungsbeispiel entsprechen, um 100 größere Bezugszeichen verwendet, so daß dadurch auf die Beschreibung des ersten Ausführungsbeispieles Bezug genommen ist.

Beim Ausführungsbeispiel in Fig. 6 ist der zumindest translatorisch bewegte erste Getriebeteil 122a, der in bezug auf die erste Gelenkhälfte 112 abgestützt ist, derart abgestützt, daß der Translationsbewegung dieses ersten Getriebeteiles 122a noch eine Schwenkbewegung um die Gelenkachse 113 relativ zur ersten Gelenkhälfte 112 überlagert ist. Die genannte Abstützung geschieht also unter Zulassung eines Schwenkwinkels zwischen der ersten Gelenkhälfte 112 einerseits und dem ersten Getriebeteil 122a andererseits, wodurch sich der insgesamt erreichbare Schwenkwinkel zwischen den Gelenkhälften 111 und 112 vergrößern läßt. Verwirklicht ist diese Abstützung nach dem gleichen getrieblichen Prinzip eines Kurvengetriebes 136, das z.B. an der ersten Gelenkhälfte 112 eine Nockenbahn 137, z.B. in Form einer Nut, aufweist und das ferner am ersten Getriebeteil 122a der Nockenbahn 137 zugeordnete und entlang dieser bewegte Nocken 138 in Form zweier Rollen 139, 140 aufweist. Das Kurvengetriebe 136 ist also genauso gebildet wie dasjenige, das die Schwenkbewegung zwischen den Gelenkhälften 111 und 112 erzeugt. Auch die sonstigen Einzelheiten dieses Kurvengetriebes sind die gleichen.

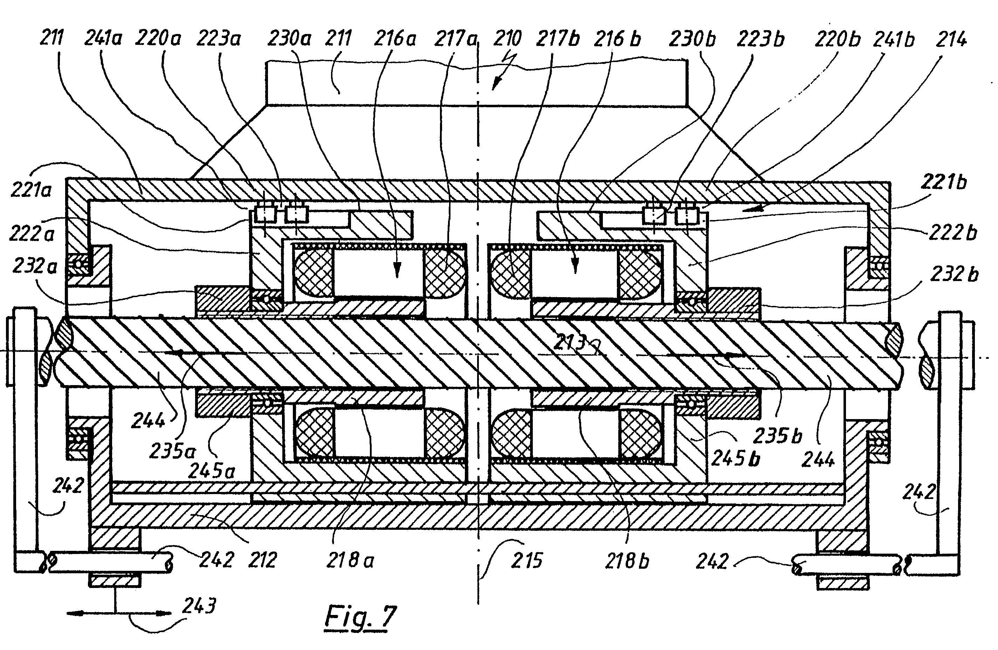

Bei dem in Fig. 7 gezeigten fünften Ausführungsbeispiel sind aus den genannten Gründen für gleiche Teile um 200 größere Bezugszeichen verwendet.

Abweichend vom ersten Ausführungsbeispiel weist in Fig. 7 die Antriebseinheit 214 zwei koaxiale, eigenständige Motoren 216a, 216b mit jeweils nicht weiter gezeigtem, zugeordnetem Weg- und Geschwindigkeitsmeßsystem auf. Beide Motoren 216a, 216b sind gleichartig und dabei symmetrisch beidseitig der Symmetrieebene 215 angeordnet. Jedem Motor 216a, 216b ist hier ein eigenes Kurvengetriebe 241a, 241b zugeordnet, das genauso wie beim ersten Ausführungsbeispiel beschaffen ist, jedoch in kinematischer Umkehr entsprechend Fig. 4. Demgemäß weist der zumindest translatorisch bewegte erste Getriebeteil 222a bzw. 222b die Nockenbahn 221a bzw. 221b in Form einer in die Außenfläche 230a bzw. 230b eingebrachten Nut auf, während der andere, mit der zweiten Gelenkhälfte 211 einstückige zweite Getriebeteil 220a bzw. 220b die Nocken 223a bzw. 223b in Form gezeigter Rollen trägt, die mit den zugeordneten Nockenbahnen 221a bzw. 221b getrieblich in Eingriff stehen.

Beide Gelenkhälften 211, 212 sind wie beim ersten Ausführungsbeispiel um die Gelenkachse 213 schwenkbar verbunden. Abweichend vom ersten Ausführungsbeispiel ist die erste Gelenkhälfte 212, an der die beiden zumindest translatorisch bewegten ersten Getriebeteile 222a bzw. 222b abgestützt sind, an einem nur schematisch mit 242 angedeuteten Maschinenteil, z.B. Maschinengestell, so geführt und gehalten, daß diese erste Gelenkhälfte 212, und über diese zusammen damit die zweite Gelenkhälfte 211, parallel zur Gelenkachse 214 in Pfeilrichtung 243 translatorisch verschiebbar ist.

Beide Gelenkhälften 211, 212 sind von einer z.B. durchgehenden Gewindespindel 244 durchsetzt, die z.B. als Kugelumlaufspindel ausgebildet und mit einem in einer Richtung verlaufenden Gewinde versehen ist. Die Gewindespindel 244 ist undrehbar und fest mit dem Maschinengestell 242 verbunden. Sie verläuft koaxial zur Gelenkachse 213.

Der eine Motor 216a treibt den ihn zugeordneten, zumindest translatorisch bewegten ersten Getriebeteil 222a an. Der andere Motor 216b treibt den ihm zugeordneten entsprechenden ersten Getriebeteil 222b an. Beide ersten Getriebeteile 222a, 222b weisen eine Spindelmutter 232a, 232b auf, mit der sie axial gekoppelt sind und auf der sie jeweils mittels eines Lagers 245a bzw. 245b drehbar gehalten sind. Jede Spindelmutter 232a, 232b ist drehfest mit dem Rotor 218a bzw. 218b des jeweiligen Motors 216a, 216b verbunden, so daß jede Spindelmutter 232a, 232b zusammen mit dem jeweiligen Rotor 218a, 218b umläuft.

Der Stator 217a bzw. 217b des jeweiligen Motors 216a bzw. 216b ist drehfest mit dem zugehörigen, zumindest translatorisch bewegten ersten Getriebeteil 222a bzw. 222b verbunden und bewegt sich zusammen mit diesem.

Die Gewindespindel 244 durchsetzt beide Motoren 216a und 216b, die relativ zur Gewindespindel 244 gegenläufig voneinanderweg bzw. aufeinanderzu axial beweglich sind und auf der Gewindespindel 244 dabei abgestützt sein können.

Werden beide Motoren 216a und 216b angesteuert, wobei die Winkelgeschwindigkeit jedes Motors bzw. die Winkelgröße der Umlaufbewegung jeweils gleich und dabei auch gleich gerichtet ist, erfolgt eine reine Schwenkbewegung des Gelenkantriebes 210 um die Gelenkachse 213. Durch Umlauf des Rotors 218a mit Spindelmutter 232a wird der eine erste Getriebeteil 222a axial in Pfeilrichtung 235a verschoben, wobei symmetrisch dazu durch Umlauf des Rotors 218b der andere erste Getriebeteil 222b gegensinnig in Pfeilrichtung 235b verschoben wird. Dann sind beide Kurvengetriebe 241a, 241b in der Lage, diese Translationsbewegung in eine relative Schwenkbewegung der zweiten Gelenkhälfte 211 relativ zur ersten Gelenkhälfte 212 umzusetzen.

Werden die Motoren 216a und 216b dagegen so angesteuert, daß sie zwar mit gleicher Winkelgeschwindigkeit, nun aber gegensinnig zueinander, umlaufen, so hat dies aufgrund der Abstützung über das Kurvengetriebe des anderen Motors zur Folge, daß dabei nun die zweite Gelenkhälfte 211 und mit dieser die erste Gelenkhälfte 212 als Einheit relativ zur Gewindespindel 244 axial in Richtung des Pfeils 243, mithin translatorisch, verschoben werden, und zwar in einer Richtung. Werden die so gegensinnig zueinander mit gleicher Winkelgeschwindigkeit umlaufenden Motoren 216a, 216b hinsichtlich dieser Ansteuerung vertauscht, erfolgt eine reine Translationsbewegung des gesamten Gelenkantriebes 210 in der anderen Axialrichtung.

Werden beide Motoren 216a und 216b so angesteuert, daß sie gleichsinnig, jedoch mit unterschiedlich großen Winkelgeschwindigkeiten umlaufen, so hat dies zum einen eine Schwenkbewegung der Gelenkhälften 211, 212 um die Gelenkachse 213 und zum anderen eine gleichzeitige Translationsbewegung relativ zur Gewindespindel 244 zur Folge.

Bei dieser Ausführungsform der Antriebsvorrichtung werden unter Beibehaltung einfacher, leichter und billiger Getriebe in Form der Kurvengetriebe die gleichen Vorteile erreicht, die der in der EP-A 202 415, veröffentlicht am 26. 11. 1986, beschriebenen Antriebsvorrichtung eigen sind, in welcher ein Kegelrad-Riementrieb Verwendung findet. Die Antriebsvorrichtung läßt sich als reiner Schwenkantrieb und auch als Schwenkantrieb und gleichzeitige Lineareinheit verwenden.

**Patentansprüche**

1. Antriebsvorrichtung zur Erzeugung von Schwenkbewegungen, mit zwei Gelenkhälften (11; 111; 211 und 12; 112; 212), die um eine gemeinsame Gelenkachse (13; 113; 213) schwenkbar miteinander verbunden sind und mindestens einen Motor mit einem Weg- und Geschwindigkeitsmeßsystem enthalten, dessen Stator undrehbar an der ersten Gelenkhälfte (12; 112; 212) festgelegt ist und dessen Rotor demgegenüber drehbar ist und über beidseitig des Motors angeordnete Getriebe eine Schwenkverstellung der zweiten Gelenkhälfte (11; 111; 211) relativ zur ersten Gelenkhälfte (12; 112; 212) vornimmt, dadurch gekennzeichnet, daß das Getriebe einen ersten Getriebeteil (22a, 22b; 122a; 222a, 222b), der vom Rotor (18; –; 218a, 218b) zumindest translatorisch angetrieben ist, ferner einen an der zweiten Gelenkhälfte (11; 111; 211) angreifenden zweiten Getriebeteil (20a, 20b; –; 220a, 220b) und zwischen dem ersten Getriebeteil (22a, 22b; 122a; 222a, 222a) und dem zweiten Getriebeteil (20a, 20b; –; 220a, 220b) ein Kurvengetriebe mit einer Nockenbahn (21a, 21b; –; 221a, 221b) einerseits und entlang der Nockenbahn (21a, 21b; –; 221a, 221b) bewegten Nocken (23a, 23b; –; 223a, 223b) in Form von Gleit- oder insbesondere Rollkörpern andererseits aufweist, mittels der die Translationsbewegung des ersten Getriebeteils (22a, 22b; 122a; 222a, 222b) über den zweiten Getriebeteil (20a, 20b; –; 220a, 220b) in eine relative Schwenkbewegung der zweiten Gelenkhälfte (11; 111; 211) umformbar ist.

2. Antriebsvorrichtung nach Anspruch 1, dadurch gekennzeichnet, daß der zweite Getriebeteil (20a, 20b; 220a, 220b) die Schwenkbewegung als Abtriebsbewegung ausführt und fest mit der zweiten Gelenkhälfte (11; 211) verbunden ist.

3. Antriebsvorrichtung nach Anspruch 1 oder 2, dadurch gekennzeichnet, daß der zweite Getriebeteil (20a, 20b; 220a, 220b) die Schwenkbewegung als Abtriebsbewegung ausführt und einstückig mit der zweiten Gelenkhälfte (11; 211) ist.

4. Antriebsvorrichtung nach einem der Ansprüche 1–3, dadurch gekennzeichnet, daß der zweite Getriebeteil (20a, 20b) die Nockenbahn (21a, 21b) trägt und Teil der zweiten Gelenkhälfte (11) ist und daß der erste Getriebeteil (22a, 22b) die Nocken (23a, 23b) trägt und an der ersten Gelenkhälfte (12) abgestützt ist, oder kinematisch umgekehrt.

5. Antriebsvorrichtung nach einem der Ansprüche 1–4, dadurch gekennzeichnet, daß der erste Getriebeteil (22a, 22b; 222a, 222b) undrehbar, jedoch parallel zur Gelenkachse (13; 213) verschiebbar, an der ersten Gelenkhälfte (12; 212) abgestützt ist.

6. Antriebsvorrichtung nach Anspruch 5, dadurch gekennzeichnet, daß der erste Getriebeteil (22a, 22b; 222a, 222b) Längsführungsmittel, insbesondere Stege, Nuten (25a, 25b; –) od. dgl. aufweist, die entlang zugeordneten Längsführungsmitteln, wie Nuten, Stegen (24a, 24b; –) od. dgl. der ersten Gelenkhälfte (12; 212) unter gleichzeitiger Verdrehsicherung geführt sind.

7. Antriebsvorrichtung nach einem der Ansprüche 1–4, dadurch gekennzeichnet, daß der erste Getriebeteil (122a) zusätzlich zur Translationsbewegung noch relativ schwenkbar an der zugeordneten ersten Gelenkhälfte (112) abgestützt ist.

8. Antriebsvorrichtung nach Anspruch 7, gekennzeichnet durch ein mit Nockenbahn (137) einerseits und entlang dieser bewegte Nocken (138) in Form von Gleit- oder insbesondere Rollkörpern (139, 140) andererseits versehenes Kurvengetriebe (136) als Abstützung zwischen dem translatorisch und schwenkbar beweglichen ersten Getriebeteil (122a) einerseits und der diesen abstützenden ersten Gelenkhälfte (112) andererseits.

9. Antriebsvorrichtung nach einem der Ansprüche 1–8, dadurch gekennzeichnet, daß die jeweilige Nockenbahn (21a, 21b; –, 137; 221a, 221b) aus einer Nut oder aus einem überstehenden Steg (31) gebildet ist.

10. Antriebsvorrichtung nach einem der Ansprüche 1–9, dadurch gekennzeichnet, daß die Nocken (23a, 23b; 138; 223a, 223b) in Form der Gleit- oder insbesondere Rollkörper zumindest paarweise angeordnet sind und dabei ein Nocken an der einen Nockenbahnfläche und der andere Nocken an der gegenüberliegenden Nockenbahnfläche anliegt.

11. Antriebsvorrichtung nach Anspruch 10, dadurch gekennzeichnet, daß zumindest ein Nocken eines Paares unter Spielausgleich einstellbar gehalten ist.

12. Antriebsvorrichtung nach Anspruch 11, dadurch gekennzeichnet, daß der eine einstellbare Nocken eine Exzenterlagerung aufweist.

13. Antriebsvorrichtung nach einem der Ansprüche 1–12, dadurch gekennzeichnet, daß jeder Nocken aus einer Rolle besteht.

14. Antriebsvorrichtung nach einem der Ansprüche 1–13, dadurch gekennzeichnet, daß im Verlauf der Nockenbahn mehrere Rollenpaare angeordnet sind.

15. Antriebsvorrichtung nach einem der Ansprüche 1–14, dadurch gekennzeichnet, daß die Nockenbahn (21a, 21b; –, 137; 221a, 221b) als Teil einer um die Gelenkachse (13; 113; 213) verlaufenden Bogenbahn, Spiralbahn, Ellipsenbahn, Parabelbahn, Hyperbelbahn od. dgl. ausgebildet ist oder aus Teilen solcher Bahnen zusammengesetzt ist.

16. Antriebsvorrichtung nach einem der Ansprüche 1–15, dadurch gekennzeichnet, daß der erste Getriebeteil (22a, 22b; 122a; 222a, 222b) als Scheibe, Glocke od. dgl. ausgebildet ist und auf der Außenfläche (30a; –; 230a) der Scheibe, Glocke od. dgl. die Nockenbahn (21a; –; 221a, 221b) oder – bei kinematischer Umkehr – die Nocken aufweist.

17. Antriebsvorrichtung nach einem der Ansprüche 1–16, dadurch gekennzeichnet, daß der erste Getriebeteil (22a, 22b; 222a, 222b) eine Spindelmutter (32a, 32b; 232a, 232b) aufweist, die auf einer zur Gelenkachse (13; 213) koaxialen Gewindespindel (33a, 33b; 244) sitzt und darauf axial beweglich ist.

18. Antriebsvorrichtung nach Anspruch 17, dadurch gekennzeichnet, daß die Spindelmutter (32a, 32b) drehfest mit dem zugeordneten ersten Getriebeteil (22a, 22b) verbunden ist.

19. Antriebsvorrichtung nach Anspruch 17 oder 18, dadurch gekennzeichnet, daß die zu beiden Seiten des Rotors (18) angeordnete Gewindespindel (33a, 33b) mit dem Rotor (18) drehfest verbunden ist.

20. Antriebsvorrichtung nach Anspruch 19, dadurch gekennzeichnet, daß die beidseitig des Rotors (18) angeordneten Gewindespindeln (33a, 33b) gegenläufige Gewinde aufweisen.

21. Antriebsvorrichtung nach Anspruch 19 oder 20, dadurch gekennzeichnet, daß die beidseitig des Rotors (18) angeordneten Gewindespindeln (33a, 33b) an der ersten Gelenkhälfte (12) drehbar gelagert sind, an der der erste Getriebeteil (22a, 22b) abgestützt ist.

22. Antriebsvorrichtung, bei der zwei koaxiale, eigenständige Motoren (216a, 216b) mit jeweils zugeordneten Weg- und Geschwindigkeitsmeßsystemen kombiniert sind, dadurch gekennzeichnet, daß jedem Motor (216a, 216b) ein eigenes Kurvengetriebe (241a, 241b) nach einem der Ansprüche 1–17 zugeordnet ist.

23. Antriebsvorrichtung nach Anspruch 22, dadurch gekennzeichnet, daß die erste Gelenkhälfte (212), die den ersten Getriebeteil (222a, 222b) abstützt, an einem Maschinengestell (242) im wesentlichen parallel zur Gelenkachse (213) translatorisch verschiebbar geführt und gehalten ist.

24. Antriebsvorrichtung nach Anspruch 23, dadurch gekennzeichnet, daß beide Gelenkhälften (211, 212) von einer Gewindespindel (244) durchsetzt sind, die undrehbar und fest mit dem Maschinengestell (242) verbunden ist.

25. Antriebsvorrichtung nach einem der Ansprüche 22–24, dadurch gekennzeichnet, daß jeder Motor (216a, 216b) einen ersten Getriebeteil (222a, 222b) aufweist und antreibt, der auf einer jeweils zugehörigen Spindelmutter (232a, 232b) relativ zu dieser drehbar gehalten ist, die mit diesem ersten Getriebeteil (222a, 222b) axial gekoppelt ist und auf der Gewindespindel (244) drehbar und axial beweglich ist.

26. Antriebsvorrichtung nach Anspruch 25, dadurch gekennzeichnet, daß jede Spindelmutter (232a, 232b) drehfest mit dem Rotor (218a, 218b) des jeweiligen zugeordneten Motors (216a, 216b) verbunden ist.

27. Antriebsvorrichtung nach einem der Ansprüche 22–26, dadurch gekennzeichnet, daß der Stator (217a, 217b) des jeweiligen Motors (216a, 216b) drehfest mit dem zugehörigen, ersten Getriebeteil (222a, 222b) verbunden ist und sich zusammen mit diesem bewegt.

28. Antriebsvorrichtung nach einem der Ansprüche 22–27, dadurch gekennzeichnet, daß beide Motoren (216a, 216b) von der Gewindespindel (244) durchsetzt sind und relativ zu dieser gegenläufig voneinanderweg bzw. aufeinanderzu axial beweglich sind.

29. Antriebsvorrichtung nach einem der Ansprüche 22–28, dadurch gekennzeichnet, daß beide Motoren (216a, 216b) auf der Gewindespindel (244) abgestützt sind.

**Claims**

1. Drive device for generating pivoting movements, having two joint halves (11; 111; 211 and 12; 112; 212) which are connected with one another pivotably about a common joint axis (13; 113; 213) and contain at least one motor with a distance and speed-measuring system, the stator of which is made fast non-rotatably on the first joint half (12; 112; 212) and the rotor of which is rotatable in relation thereto and through transmissions arranged on both sides of the motor effects a pivot displacement of the second joint half (11; 111; 211) in relation to the first joint half (12; 112; 212), characterised in that the transmission comprises a first gear part (22a, 22b; 122a; 222a, 222b) which is driven at least in translation by the rotor (18; –; 218a, 218b), further a second gear part (20a, 20b; –; 220a, 220b) acting on the second joint half (11; 111; 211), and between the first gear part (22a, 22b; 122a; 222a, 222b) and the second gear part (20a, 20b; –; 220a, 220b) a cam gear with a cam path (21a, 21b; –; 221a, 221b) for the one part and cams (23a, 23b; –; 223a, 223b) in the form of sliding or especially rolling bodies, moved along the cam path (21a, 21b; –; 221a, 221b) for the other part, by means of which the translational movement of the first gear part (22a, 22b; 122a; 222a, 222b) can be converted through the second gear part (20a, 20b; –; 220a, 220b) into a relative pivotal movement of the second joint half (11; 111; 211).

2. Drive device according to Claim 1, characterised in that the second gear part (20a, 20b; 220a, 220b) carries out the pivoting movement as drive-output movement and is firmly connected with the second joint half (11; 211).

3. Drive device according to Claim 1 or 2, characterised in that the second gear part (20a, 20b; 220a, 220b) carries out the pivoting movement as drive-output movement and is in one piece with the second joint half (11; 211).

4. Drive device according to one of Claims 1–3, characterised in that the second gear part (20a, 20b) carries the cam path (21a, 21b) and is part of the second joint half (11) and in that the first gear part (22a, 22b) carries the cams (23a, 23b) and is supported on the first joint half (12), or kinematically vice versa.

5. Drive device according to one of Claims 1–4, characterised in that the first gear part (22a, 22b; 222a, 222b) is supported on the first joint half (12; 212) nonrotatably but displaceably parallel with the joint axis (13; 213).

6. Drive device according to Claim 5, characterised in that the first gear part (22a, 22b; 222a, 222b) comprises longitudinal guidance means, especially flanges, grooves (25a, 25b; –) or the like, which are guided along associated longitudinal guidance means, such as grooves, flanges (24a, 24b; –) or the like of the first joint half (12; 212), with simultaneous securing in rotation.

7. Drive device according to one of Claims 1–4, characterised in that the first gear part (122a) in addition to the translational movement is also relatively pivotably supported on the allocated first joint half (112).

8. Drive device according to Claim 7, characterised by a cam gearing (136), provided with cam path (137) for the one part and cams (138) moved along this in the form of sliding or especially rolling bodies (139, 140) for the other part, as support between the translationally and pivotally movable first gear part (122a) for the one part and the first joint half (112) supporting this for the other part.

9. Drive device according to one of Claims 1–8, characterised in that the cam path (21a, 21b; –; 137; 221a, 221b) in each case is formed from a groove or from a protruding flange (31).

10. Drive device according to one of Claims 1–9, characterised in that the cams (23a, 23b; 138; 223a, 223b) in the form of sliding or especially rolling bodies are arranged at least by pairs with one cam resting on the one cam track face and the other cam on the opposite cam track face.

11. Drive device according to Claim 10, characterised in that at least one cam of a pair is held adjustably with play compensation.

12. Drive device according to Claim 11, characterised in that the one adjustable cam comprises an eccentric mounting.

13. Drive device according to one of Claims 1–12, characterised in that each cam consists of a roller.

14. Drive device according to one of Claims 1–13, characterised in that several roller pairs are arranged in the course of the cam path.

15. Drive device according to one of Claims 1–14, characterised in that the cam path (21a, 21b; –, 137; 221a, 221b) is made as part of an arcuate track, spiral track, elliptical track, parabolic track, hyperbolic track or the like extending around the joint axis (13; 113; 213), or is composed of such tracks.

16. Drive device according to one of Claims 1–15, characterised in that the first gear part (22a, 22b; 122a; 222a, 222b) is formed as disc, bell or the like and comprises the cam path (21a; –; 221a, 221b) or – in the case of kinematic reversal – the cams, on the outer surface (30a; –; 230a) of the disc, bell or the like.

17. Drive device according to one of Claims 1–16, characterised in that the first gear part (22a, 22b; 222a, 222b) comprises a spindle nut (32a, 32b; 232a, 232b) which is seated on a threaded spindle (33a, 33b; 244) coaxial with the joint axis (13; 213), and is axially movable thereon.

18. Drive device according to Claim 17, characterised in that the spindle nut (32a, 32b) is connected fast in rotation with the associated first gear part (22a, 22b).

19. Drive device according to Claim 17 or 18, characterised in that the threaded spindle (33a, 33b) arranged to both sides of the rotor (18) is connected fast in rotation with the rotor (18).

20. Drive device according to Claim 19, characterised in that the threaded spindles (33a, 33b) arranged on both sides of the rotor (18) possess oppositely directed threadings.

21. Drive device according to Claim 19 or 20, characterised in that the threaded spindles (33a, 33b) arranged on both sides of the rotor (18) are rotatably mounted on the first joint half (12) on which the first gear part (22a, 22b) is supported.

22. Drive device in which two coaxial, independent motors (216a, 216b) each with associated distance and speed measuring systems are combined, characterised in that to each motor (216a, 216b) there is allocated its own cam gearing (241a, 241b) according to one of Claims 1–17.

23. Drive device according to Claim 22, characterised in that the first joint half (212) which supports the first gear part (222a, 222b) is guided for translational displacement substantially parallel to the joint axis (213) and held on a machine frame (242).

24. Drive device according to Claim 23, characterised in that the two joint halves (211, 212) are penetrated by a threaded spindle (244) which is nonrotatably and firmly connected with the machine frame (242).

25. Drive device according to one of Claims 22–24, characterised in that each motor (216a, 216b) comprises and drives a first gear part (222a, 222b) which is held on a pertinent spindle nut (232a, 232b) in each case rotatably in relation thereto, which nut is axially coupled with this first gear part (222a, 222b) and is rotatable and axially movable on the threaded spindle (244).

26. Drive device according to Claim 25, characterised in that each spindle nut (232a, 232b) is connected fast in rotation with the rotor (218a, 218b) of the associated motor (216a, 216b) in each case.

27. Drive device according to one of Claims 22–26, characterised in that the stator (217a, 217b) of the respective motor (216a, 216b) is connected fast in rotation with the pertinent first gear part (222a, 222b) and moves together therewith.

28. Drive device according to one of Claims 22–27, characterised in that the two motors (216a, 216b) are penetrated by the threaded spindle (244) and are axially movable away from one another and towards one another in opposite directions in relation to this spindle.

29. Drive device according to one of Claims 22–28, characterised in that the two motors (216a, 216b) are supported on the threaded spindle (244).

**Revendications**

1. Dispositif de commande pour produire des mouvements basculants avec deux moitiés d'articulation (11, 111, 211 et 12, 112, 212) qui sont assemblées l'une à l'autre à pivot autour d'un axe d'articulation commun (13, 113, 213) et qui contiennent au moins un moteur avec un système de mesure du déplacement et de la vitesse, dont le stator est fixé sans possibilité de rotation à la première moitié d'articulation (112, 212) et dont le rotor peut tourner par rapport à celle-ci et avec une transmission disposée de part et d'autre du moteur qui provoque un mouvement de basculement de la deuxième moitié d'articulation (11, 111, 211) par rapport à la première moitié d'articulation (12, 112, 212), caractérisé en ce que la transmission comporte une première partie de transmission (22a, 22b, 122a, 222a, 222b) qui est commandée par le rotor (18, 218a, 218b) pour effectuer au moins un mouvement de translation, ainsi qu'une deuxième partie de transmission (20a, 20b, 220a, 220b) engrenant avec la deuxième moitié d'articulation (11, 111, 211) et, entre la première partie de transmission (22a, 22b, 122a, 222a, 222b) et la seconde partie de transmission (20a, 20b, 220a, 220b), une transmission à cames avec une piste des cames (21a, 21b, 221a, 221b) d'une part et d'autre part des cames (23a, 23b, 223a, 223b) sous forme de corps glissants ou en particulier roulants, se déplaçant le long de la piste des cames (21a, 21b, 221a, 221b) au moyen de laquelle le mouvement de translation de la première partie de transmission (22a, 22b, 122a, 222a, 222b) par rapport à la deuxième partie de transmission (20a, 20b, 220a, 220b) peut être transformé en un mouvement de basculement relatif de la deuxième moitié d'articulation (11, 111, 211).

2. Dispositif de commande selon la revendication 1, caractérisé en ce que la deuxième partie de transmission (20a, 20b, 220a, 220b) exécute le mouvement de basculement comme un mouvement de sortie de transmission et est assemblé rigidement à la deuxième moitié d'articulation (11, 211).

3. Dispositif de commande selon la revendication 1 ou 2, caractérisé en ce que la deuxième partie de transmission (20a, 20b, 220a, 220b) exécute le mouvement de basculement sous forme d'un déplacement de sortie de transmission et est réalisé d'une pièce avec la deuxième moitié d'articulation (11, 211).

4. Dispositif de commande selon la revendication 1 à 3, caractérisé en ce que la deuxième partie de transmission (20a, 20b) supporte la piste des cames (21a, 21b) et fait partie de la deuxième moitié d'articulation (11) et que la première partie de transmission (22a, 22b) porte les cames (23a, 23b) et est supportée par la première moitié d'articulation (12) ou inversément d'un point de vue cinématique.

5. Dispositif de commande selon l'une des revendications 1 à 4, caractérisé en ce que la première partie de transmission (22a, 22b, 222a, 222b) est supportée par la première moitié d'articulation (12, 211) sans possibilité de rotation, mais avec possibilité de déplacement parallèlement à l'axe d'articulation (13, 213).

6. Dispositif de commande selon la revendication 5, caractérisé en ce que la première partie de transmission (22a, 22b, 222a, 222b) présente des moyens de guidage longitudinaux et en particulier des nervures, des rainures (25a 25b) ou éléments analogues qui sont guidés le long de moyens de guidage longitudinaux correspondants tels que rainures, nervures (24a, 24b) ou éléments analogues de la première articulation (12, 212) tandis que la rotation est empêchée simultanément.

7. Dispositif de commande selon la revendication 1 à 4, caractérisé en ce que la première partie de transmission (122a) est supportée par la première moitié d'articulation (112) correspondante avec possibilité d'effectuer non seulement un mouvement de translation, mais également un mouvement de basculement.

8. Dispositif de commande selon la revendication 7, caractérisé par une transmission à cames (136) pourvue d'une part, d'une piste des cames (137) et, d'autre part, de cames (138) sous forme de corps glissants ou en particulier roulants (139, 140) qui se déplacent le long de celle-ci pour servir de support entre, d'une part, la première partie de transmission (122a) pouvant subir un mouvement de translation et de basculement et d'autre part la première moitié d'articulation (112) prenant appui sur celle-ci.

9. Dispositif de commande selon l'une des revendications 1 à 8, caractérisé en ce que chaque piste des cames (21a, 21b, 137, 221a, 221b) est constituée d'une rainure ou d'une nervure en saillie (31).

10. Dispositif de commande selon l'une des revendications 1 à 9, caractérisé en ce que les cames (23a, 23b, 138, 223a, 223b) sous forme de corps glissants ou en particulier roulants sont disposées par paires, tandis qu'une came prend appui sur la surface de la piste des cames et que l'autre came prend appui sur la face opposée de la piste des cames.

11. Dispositif de commande selon la revendication 10, caractérisé en ce que au moins une came d'une paire est montée avec possibilité de réglage pour compenser le jeu.

12. Dispositif de commande selon la revendication 11, caractérisé en ce que la came réglable présente un support excentrique.

13. Dispositif de commande selon l'une des revendications 1 à 12, caractérisé en ce que chaque came est constituée d'un galet.

14. Dispositif de commande selon l'une des reven- dicacations 1 à 13, caractérisé en ce que plusieurs paires de galets sont disposées sur le parcours de la piste des cames.

15. Dispositif de commande selon l'une des revendications 1 à 14, caractérisé en ce que la piste des cames (21a, 21b, 137, 221a, 221b) se présente sous forme d'une partie d'une piste en arc, d'une piste en spirale, d'une piste en éllipse, d'une piste en parabole, d'une piste en hyperbole ou de forme analogue disposée autour de l'axe d'articulation (13, 113, 213) ou bien est constituée de parties de pistes de ce genre.

16. Dispositif de commande selon l'une des revendications 1 à 15, caractérisé en ce que la première partie de transmission (22a, 22b, 122a, 222a, 222b) est constituée par un disque, une cloche ou un élément analogue et présente sur la surface extérieure (30a, 230a) du disque, de la cloche etc. la piste des cames (21a, 221a, 221b) ou, en cas d'inversion cinématique, les cames.

17. Dispositif de commande selon l'une des revendications 1 à 16, caractérisé en ce que la première partie de transmission (22a, 22b, 222a, 222b) présente un écrou fileté (32a, 32b, 232a, 232b) qui repose sur une broche filetée (33a, 33b, 244) co-axiale à l'axe d'articulation (13, 213) et qui peut se déplacer axialement sur celle-ci.

18. Dispositif de commande selon la revendication 17, caractérisé en ce que l'écrou fileté (32a, 32b) est assemblé sans possibilité de rotation à la première partie de transmission (22a, 22b) qui lui correspond.

19. Dispositif de commande selon la revendication 17 ou 18, caractérisé en ce que les broches filetées (33a, 33b) disposées sur les deux côtés du rotor sont assemblées au rotor (18) sans possibilité de rotation.

20. Dispositif de commande selon la revendication 19, caractérisé en ce que les broches filetées (33a, 33b) disposées de part et d'autre du rotor (18) présentent des filetages opposés.

21. Dispositif de commande selon la revendication 19 ou 20, caractérisé en ce que les broches filetées (33a, 33b) disposées de part et d'autre du rotor (18) sont montées avec possibilité de rotation sur la première moitié d'articulation (12) sur laquelle prend appui la première partie de transmission (22a, 22b).

22. Dispositif de commande dans lequel deux moteurs indépendants co-axiaux (216a, 216b) sont combinés avec des systèmes de mesure de déplacement et de vitesse correspondants, caractérisé en ce que à chaque moteur (216a, 216b) correspond sa propre transmission à cames (241a, 241b) conforme à l'une des revendications 1 à 17.

23. Dispositif de commande selon la revendication 22, caractérisé en ce que la première moitié d'articulation (212) qui supporte la première partie de transmission (222a, 222b) est guidée et maintenue sur un châssis de machines (242) avec possibilité d'effectuer un mouvement de translation essentiellement parallèle à l'axe d'articulation (213).

24. Dispositif de commande selon la revendication 23, caractérisé en ce que les deux moitiés d'articulation (211, 212) sont traversées par une broche filetée (244) qui est assemblée au châssis des machines (242) de manière rigide et sans possibilité de rotation.

25. Dispositif de commande selon l'une des revendications 22 à 24, caractérisé en ce que chaque moteur (216a, 216b) présente et entraîne une première partie de transmission (222a, 222b) qui est maintenue sur un écrou fileté correspondant (232a, 232b) avec possibilité de rotation par rapport à celui-ci, qui est couplée axialement à cette première partie de transmission (222a, 222b) et qui peut se déplacer axialement et tourner sur la broche filetée (244).

26. Dispositif de commande selon la revendication 25, caractérisé en ce que chaque écrou fileté (232a, 232b) est assemblé au rotor (218a, 218b) du moteur correspondant (216a, 216b) sans possibilité de rotation.

27. Dispositif de commande selon l'une des revendications 22 à 26, caractérisé en ce que le stator (217a, 217b) du moteur correspondant (216a, 216b) est assemblé sans possibilité de rotation à la première partie de transmission correspondante (222a, 222b) et se déplace avec celle-ci.

28. Dispositif de commande selon l'une des revendications 22 à 27, caractérisé en ce que les deux moteurs (216a, 216b) sont traversés par la broche fileté (244) et peuvent se déplacer axialement rapprochant par rapport à celle-ci et en sens opposé en se rapprochant ou en s'écartant.

29. Dispositif de commande selon l'une des revendications 22 à 28, caractérisé en ce que les deux moteurs (216a, 216b) sont supportés sur la broche filetée (244).

Fig.1

EP 0 213 318 B1

26a  27a  28a  11  21a  29a  20a

_Fig. 2a_

29b  27b  26b  11  20b

28b  21b

_Fig. 2b_

EP 0 213 318 B1

_Fig. 3_

_Fig. 4_

_Fig. 5_

_Fig.6_

Fig. 7